# EUROPÄISCHE PATENTSCHRIFT

(11) **EP 2 931 545 B1**
(45) Veröffentlichungstag und Bekanntmachung des Hinweises auf die Patenterteilung: **14.06.2017**
(21) Anmeldenummer: 13779182.8
(22) Anmeldetag: 11.10.2013
(51) Int. Cl.: B60K 6/48, B60K 6/547, B60K 6/40

(54) **HYBRID-ANTRIEBSSTRANG UND VERFAHREN ZUM BETREIBEN EINES SOLCHEN**
HYBRID DRIVETRAIN AND METHOD FOR OPERATING THE SAME
CHAÎNE CINÉMATIQUE HYBRIDE ET PROCÉDÉ PERMETTANT DE FAIRE FONCTIONNER LADITE CHAÎNE CINÉMATIQUE HYBRIDE

(30) Priorität: 19.10.2012 DE 102012021074
(43) Veröffentlichungstag der Anmeldung: 21.10.2015
(73) Patentinhaber: GETRAG B.V. & Co. KG, 74199 Untergruppenbach (DE)
(72) Erfinder: BLESSING, Uli Christian, 74078 Heilbronn (DE); HOFFMEISTER, Thomas, 70825 Korntal-Münchingen (DE); GREMPLINI, Hansi, 74379 Ingersheim (DE)
(74) Vertreter: Witte, Weller & Partner Patentanwälte mbB
(86) Internationale Anmeldenummer: PCT/EP2013/071331
(87) Internationale Veröffentlichungsnummer: WO 2014/060321

(56) Entgegenhaltungen:
- DE-A1-102007 050 659
- DE-A1-102010 004 711
- DE-A1-102010 044 618
- DE-A1-102011 016 131
- US-A1- 2012 142 472

## Beschreibung

Die vorliegende Erfindung betrifft einen Hybrid-Antriebsstrang mit einem Verbrennungsmotor, der für eine maximale Verbrennungsmotordrehzahl ausgelegt ist, mit einer Doppelkupplungsanordnung, die eine erste Reibkupplung und eine zweite Reibkupplung aufweist, wobei die Reibkupplungen ein mit dem Verbrennungsmotor gekoppeltes gemeinsames Eingangsglied und jeweils ein Ausgangsglied aufweisen, mit einer Getriebeanordnung, die ein erstes Teilgetriebe und ein zweites Teilgetriebe aufweist, wobei das Ausgangsglied der ersten Reibkupplung mit einem Eingang des ersten Teilgetriebes verbunden ist und wobei das Ausgangsglied der zweiten Reibkupplung mit einem Eingang des zweiten Teilgetriebes verbunden ist, und mit einer elektrischen Maschine, die mit dem Ausgangsglied der zweiten Reibkupplung über eine Maschinenübersetzung verbunden oder verbindbar ist, derart, dass ein rein elektrischer Fahrbetrieb über das zweite Teilgetriebe einrichtbar ist, wobei die elektrische Maschine für eine maximale Maschinendrehzahl ausgelegt ist.

Ferner betrifft die vorliegende Erfindung ein Verfahren zum Betreiben eines solchen Hybrid-Antriebsstranges.

Ein derartiger Hybrid-Antriebsstrang eignet sich insbesondere zur Verwendung in Kraftfahrzeugen, wie Personenkraftwagen. Der Antriebsstrang weist ein Doppelkupplungsgetriebe mit der oben genannten Doppelkupplungsanordnung und der oben genannten Getriebeanordnung auf. Die Betriebsweise derartiger Doppelkupplungsgetriebe ist allgemein bekannt. Dem einen Getriebe werden dabei in der Regel die ungeraden Gangstufen und dem anderen Teilgetriebe die geraden Gangstufen zugeordnet. Beim Fahren in einer Gangstufe über eines der Teilgetriebe kann in dem anderen Teilgetriebe eine Anschluss-Gangstufe vorgewählt werden. Ein Gangwechsel kann dann durch überschneidende Betätigung der zwei Reibkupplungen zugkraftunterbrechungsfrei erfolgen.

Derartige Doppelkupplungsgetriebe eignen sich insbesondere, um einen Hybrid-Antriebsstrang zu realisieren.
Aus der DE 10 2011 016 131 A1 ist ein Verfahren zum Betreiben eines Hybrid-Antriebstranges für ein Kraftfahrzeug bekannt, bei dem in einem ersten Betriebsmodus Leistung von einem Verbrennungsmotor bereitgestellt wird und bei dem in einem zweiten Betriebsmodus Leistung von einer elektrischen Maschine bereitgestellt wird, wobei ein Wechsel von einem in den anderen Betriebsmodus in Abhängigkeit von dem Zustand des Antriebstranges und/oder des Kraftfahrzeuges durchgeführt wird, wobei der Wechsel des Betriebsmodus in Abhängigkeit von wenigstens einer Schaltrrariablen gesteuert wird, die eine Funktion eines angeforderten Leistungssollwertes ist.
Aus der DE 10 2007 050 659 A1 ist ein Verfahren zum Betrieben eines Antriebsstranges bekannt, wobei der Antriebstrang zumindest einen Hybridantrieb mit einem Verbrennungsmotor und einem Elektromotor und ein Doppelkupplungsgetriebe mit einem ersten Teilgetriebe und einem zweiten Teilgetriebe umfasst, wobei zwischen das erste Teilgetriebe und den Verbrennungsmotor sowie zischen das zweite Teilgetriebe und den Verbrennungsmotor jeweils eine Kupplung geschaltet ist, und wobei der Elektromotor dem ersten Teilgetriebe derart zugeordnet ist, dass der Elektromotor zwischen dem ersten Teilgetriebe und der dem ersten Teilgetriebe zugeordneten Kupplung am Antriebstrang angreift, wobei der Verbrennungsmotor über den Elektromotor gestartet werden kann.
Aus der DE 10 2014 044 618 A1 ist ein Verfahren zum Ansteuern eines Hybrid-Antriebstranges bekannt, der einen Antriebsmotor und ein Doppelkupplungsgetriebe aufweist, das zwei Leistungsübertragungspfade beinhaltet, die jeweils eine Reibkupplung und ein Teilgetriebe aufweisen, wobei eine elektrische Maschine mit einem Eingang von wenigstens einem der Teilgetriebe verbindbar ist, wobei bei einem rein elektrischen Antrieb über einen aktiven Leistungsübertragungspfad während eines Gangwechsels ein Füllmoment über den anderen, passiven Leistungsübertragungspfad übertragen wird.
Aus der DE 10 2010 004 711 A1 ist ein Hybrid-Antriebstrang für ein Kraftfahrzeug bekannt, mit einer ersten Antriebseinheit, einem Doppelkupplungsgetriebe und einer elektrischen Maschine, wobei die elektrische Maschine einem der Teilgetriebe zugeordnet ist, und wobei zwischen den zwei Reibkupplungen des Doppelkupplungsgetriebes und der ersten Antriebseinheit eine dritte Reibkupplung abgeordnet ist.

Während bei herkömmlichen Antriebssträngen eine elektrische Maschine, die dazu ausgelegt ist, Antriebsleistung bereitzustellen, im Bereich eines Ausgangs des Verbrennungsmotors angeordnet wird, ist es bei einem Doppelkupplungsgetriebe bevorzugt, eine elektrische Maschine mit einem Eingang von einem der Teilgetriebe zu verbinden. Die Verbindung kann dabei über eine weitere Kupplung erfolgen, derart, dass die elektrische Maschine von dem restlichen Antriebsstrang abkoppelbar ist. Es ist jedoch generell auch aus Kostengründen bevorzugt, wenn die elektrische Maschine fest mit dem Eingang des einen Teilgetriebes verbunden ist.

Bei dieser Ausführungsform ist es generell möglich, bei Öffnen der diesem Teilgetriebe zugeordneten Reibkupplung einen rein elektrischen Fahrbetrieb über die Gangstufen dieses Teilgetriebes einzurichten. Bei der rein elektrischen Betriebsweise des Hybrid-Antriebsstranges entsteht bei Gangwechseln eine Zugkraftunterbrechung.

Es versteht sich, dass ein derartiger Antriebsstrang auch für eine rein verbrennungsmotorische Betriebsweise ausgelegt sein kann, bei der die elektrische Maschine entweder abgekoppelt wird oder aber leerläuft. Schließlich ist es mit einem solchen Antriebsstrang auch möglich, einen Hybrid-Fahrmodus einzurichten, bei dem Antriebsleistung sowohl von dem Verbrennungsmotor als auch von der elektrischen Maschine bereitgestellt wird.

Schließlich lassen sich mit einem derartigen Antriebsstrang auch weitere Hybrid-Funktionen realisieren, wie beispielsweise ein Starten des Verbrennungsmotors mittels der elektrischen Maschine, eine Rekuperation in einem Schubbetrieb des Antriebsstranges, etc.

Vor diesem Hintergrund ist es eine Aufgabe der Erfindung, einen Hybrid-Antriebsstrang sowie ein Verfahren zum Betreiben eines Hybrid-Antriebsstranges anzugeben, wobei sich der Komfort verbessern lässt.

Diese Aufgabe wird bei dem eingangs genannten Hybrid-Antriebsstrang dadurch gelöst, dass die maximale Maschinendrehzahl größer ist als die maximale Verbrennungsmotordrehzahl, wobei das Ausgangsglied der zweiten Reibkupplung konstruktiv auf die maximale Maschinendrehzahl geteilt durch die Maschinenübersetzung ausgelegt ist.

Ferner wird die obige Aufgabe gelöst durch ein Verfahren zum Betreiben eines Hybrid-Antriebsstranges der erfindungsgemäßen Art in einem Kraftfahrzeug, mit dem Schritt, für einen rein elektrischen Fahrbetrieb die unterste Gangstufe des zweiten Teilgetriebes einzulegen und die elektrische Maschine für einen Geschwindigkeitsbereich des Kraftfahrzeugs von 0 km/h bis wenigstens 80 km/h, insbesondere bis wenigstens 100 km/h und bevorzugt bis wenigstens 120 km/h, zu verwenden, ohne in dem zweiten Teilgetriebe einen Gangstufenwechsel vorzunehmen.

In bisherigen Hybrid-Antriebssträngen sind die leistungsübertragenden Komponenten generell auf die maximale Drehzahl des Verbrennungsmotors ausgelegt. Obgleich elektrische Maschinen generell auch für höhere Drehzahlen ausgelegt sein können, werden derartige elektrische Maschinen in Hybrid-Antriebssträngen generell ausschließlich so betrieben, dass deren maximale Drehzahl gleich der maximalen Drehzahl des Verbrennungsmotors ist.

Bei einem solchen Hybrid-Antriebsstrang, bei dem die elektrische Maschine an das Ausgangsglied der zweiten Reibkupplung angekoppelt ist, wird das Ausgangsglied der zweiten Reibkupplung folglich im Stand der Technik bis zu einer maximalen Drehzahl angetrieben, die gleich der maximalen Drehzahl des Verbrennungsmotors ist.

Bei dieser Betrachtungsweise werden Fehlerzustände nicht berücksichtigt. Die angegebenen Drehzahlwerte beziehen sich ausschließlich auf eine bestimmungsgemäße Verwendung bzw. Betriebsweise des Antriebsstranges.

Im Stand der Technik ist es ferner generell so, dass in einem typischen Kraftfahrzeuggetriebe mit fünf, sechs, sieben oder mehr Vorwärtsgangstufen ist die unterste Gangstufe des zweiten Teilgetriebes (vorzugsweise jenes Getriebes, das die geraden Gangstufen beinhaltet) so ausgelegt, dass die maximale Geschwindigkeit in dieser untersten Gangstufe kleiner ist als 70 km/h (Ausnahmen sind allenfalls bei Sportwagen gegeben).

Für eine rein elektrische Betriebsweise, bei der ein elektrischer Fahrbetrieb auch beispielsweise oberhalb von 100 km/h erfolgt, muss daher ein Gangwechsel in dem zweiten Teilgetriebe erfolgen, was mit einer Zugkraftunterbrechung einhergeht.

Durch die erfindungsgemäße Maßnahme, dass die maximale Maschinendrehzahl geteilt durch die Maschinenübersetzung größer ist als die maximale Verbrennungsmotordrehzahl, kann nun die unterste Gangstufe des zweiten Teilgetriebes über einen größeren Geschwindigkeitsbereich verwendet werden, so dass ein rein elektrischer Fahrbetrieb ohne Gangstufenwechsel überwiegend realisierbar ist.

Demzufolge lässt sich der Komfort des Hybrid-Antriebsstranges deutlich verbessern.

Die Aufgabe wird somit vollkommen gelöst.

Gemäß einer besonders bevorzugten Ausführungsform ist die maximale Maschinendrehzahl um wenigstens 50 % größer als die maximale Verbrennungsmotordrehzahl.

Die maximale Maschinendrehzahl beträgt vorzugsweise wenigstens 12.000 U/min, insbesondere wenigstens 15.000 U/min.

Die Maschinenübersetzung liegt vorzugsweise im Bereich von 1 bis 2, insbesondere im Bereich von 1,2 bis 2.

Die maximale Maschinendrehzahl geteilt durch die Maschinenübersetzung ist vorzugsweise wenigstens 1,1-fach, vorzugsweise wenigstens 1,2-fach, und insbesondere wenigstens 1,3-fach so groß wie die maximale Verbrennungsmotordrehzahl.

Gemäß einer besonders bevorzugten Ausführungsform weist das zweite Teilgetriebe eine Mehrzahl von Vorwärtsgangstufen auf, wobei die maximale Maschinendrehzahl geteilt durch die Maschinenübersetzung so gewählt ist, dass bei rein elektrischem Fahrbetrieb über eine der Vorwärtsgangstufen (vorzugsweise der niedrigsten Vorwärtsgangstufe) des zweiten Teilgetriebes ein Fahrzeuggeschwindigkeitsbereich von 0 km/h bis wenigstens 80 km/h, insbesondere bis wenigstens 100 km/h und bevorzugt bis wenigstens 120 km/h realisierbar ist.

Ferner ist es bei dem erfindungsgemäßen Hybrid-Antriebsstrang bevorzugt, wenn die zweite Reibkupplung als nasslaufende Lamellenkupplung ausgebildet ist, wobei das Ausgangsglied der zweiten Reibkupplung ein Korbelement aufweist, das im Bereich seines Innenumfanges mit einer Eingangswelle des zweiten Teilgetriebes verbunden ist und das im Bereich seines Außenumfanges mit einem Lamellenträger der zweiten Reibkupplung verbunden ist.

Hierbei ist von besonderem Vorzug, wenn das Korbelement so ausgebildet ist, dass das Trägheitsmoment minimiert ist.

Insbesondere ist es bevorzugt, wenn das Korbelement für Drehzahlen ausgelegt ist, die größer sind als 8000 U/min, insbesondere größer als 9000 U/min.

Ferner ist es bevorzugt, wenn auch in Leistungsflussrichtung hinter dem Ausgangsglied der zweiten Reibkupplung liegende Bauelemente des Hybrid-Antriebsstranges für höhere Drehzahlen ausgelegt sind. Dies gilt insbesondere für einen Radsatz, der die unterste Gangstufe des zweiten Teilgetriebes bildet, sowie dessen zugeordnete Welle und Synchronisierung.

Ein der angetriebenen Achse zugeordnetes Differential des Antriebsstranges ist dabei vorzugsweise ohnehin für höhere Drehzahlen ausgelegt, so dass diesbezüglich keine Änderungen notwendig sind.

Insgesamt wird je nach Ausführungsform mit der vorliegenden Erfindung wenigstens einer der folgenden Vorteile bzw. Merkmale realisiert.

Durch eine geeignete Auslegung und/oder Versteifung des Ausgangsgliedes der zweiten Reibkupplung kann die geöffnete zweite Reibkupplung mit höheren Drehzahlen betrieben werden. Folglich können auf der Sekundärseite der zweiten Reibkupplung höhere Drehzahlen realisiert werden, mit denen sich die oben beschriebenen Geschwindigkeitsbereiche realisieren lassen.

Im Stand der Technik ist das Auslegungskriterium der maximalen Dauerbelastung der zweiten Reibkupplung die maximale Drehzahl des Verbrennungsmotors (ggf. zuzüglich einer gewissen Reserve). Dabei wird der Verbrennungsmotor als das primäre Antriebsaggregat betrachtet, so dass höhere Drehzahlen im Betrieb eines solchen Antriebsstranges des Standes der Technik nur im Fehlerfall bzw. Missbrauchsfall auftreten und bei der Auslegung als unzulässiger, nicht aktiver dauerhafter Betriebszustand angesehen werden.

Im Stand der Technik ist, wie oben beschrieben, der Komfort des Antriebsstranges verringert.

Durch geeignete konstruktive Maßnahmen wird die zweite Reibkupplung für die erhöhten Drehzahlen ausgebildet. Insbesondere kann der wirkende Durchmesser von Lamellenblechen durch beispielsweise einen winkligen oder schrägen Verlauf deutlich reduziert werden, so dass ein Hebelarm geringer ausfällt.

Beim Betreiben des Antriebsstranges ist es bevorzugt, wenn eine Sicherheitsfunktion in einer Steuereinrichtung bzw. einer Software der Steuereinrichtung realisiert ist, die bei Drehzahlen des Ausgangsgliedes der zweiten Reibkupplung oberhalb der maximalen Verbrennungsmotordrehzahl sicherstellt, dass die zweite Reibkupplung nicht geschlossen wird. Denn ansonsten könnte der Verbrennungsmotor mit überhöhter Drehzahl mitgeschleppt und geschädigt werden.

Durch die erfindungsgemäße Maßnahme können einzelne Komponenten des gesamten Antriebsstranges individuell weiter ausgenutzt werden, so dass beispielsweise bei einem konventionellen Doppelkupplungsgetriebe höhere Abschleppgeschwindigkeiten realisierbar sind. Generell wird durch die erfindungsgemäße Anbindung der elektrischen Maschine an ein Doppelkupplungsgetriebe in dem erfindungsgemäßen Hybrid-Antriebsstrang der rein elektrische Geschwindigkeitsbereich erhöht, ohne dass eine Schaltung in dem zweiten Teilgetriebe mit Zugkraftunterbrechung erfolgen muss.

Die elektrische Maschine wird vorzugsweise an das zweite Teilgetriebe angebunden, dem vorzugsweise die geraden Vorwärtsgangstufen zugeordnet sind. Alternativ ist es auch möglich, die elektrische Maschine an das erste Teilgetriebe anzubinden, dem vorzugsweise die ungeraden Vorwärtsgangstufen zugeordnet sind.

Generell ist es, wie oben beschrieben, möglich, die elektrische Maschine fest an den Eingang von einem der Teilgetriebe anzubinden (bzw. an das entsprechende Ausgangsglied zugeordneten Reibkupplung). Alternativ ist es möglich, die elektrische Maschine über eine Kupplung abkoppeln zu können, oder aber über eine geeignete Koppeleinrichtung alternativ mit dem Eingang des ersten oder mit dem Eingang des zweiten Teilgetriebes zu verbinden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen Hybrid-Antriebsstranges;
- Fig. 2: ein schematisches Diagramm zur Darstellung von Geschwindigkeitsbereichen von Vorwärtsgangstufen des Hybrid-Antriebsstranges der Fig. 1 in einem rein verbrennungsmotorischen Betrieb;
- Fig. 3: eine der Fig. 2 entsprechende Darstellung für einen rein elektromotorischen Betrieb; und
- Fig. 4: eine Längsschnittansicht durch eine Doppelkupplungsanordnung gemäß einer Ausführungsform eines Hybrid-Antriebsstranges der erfindungsgemäßen Art.

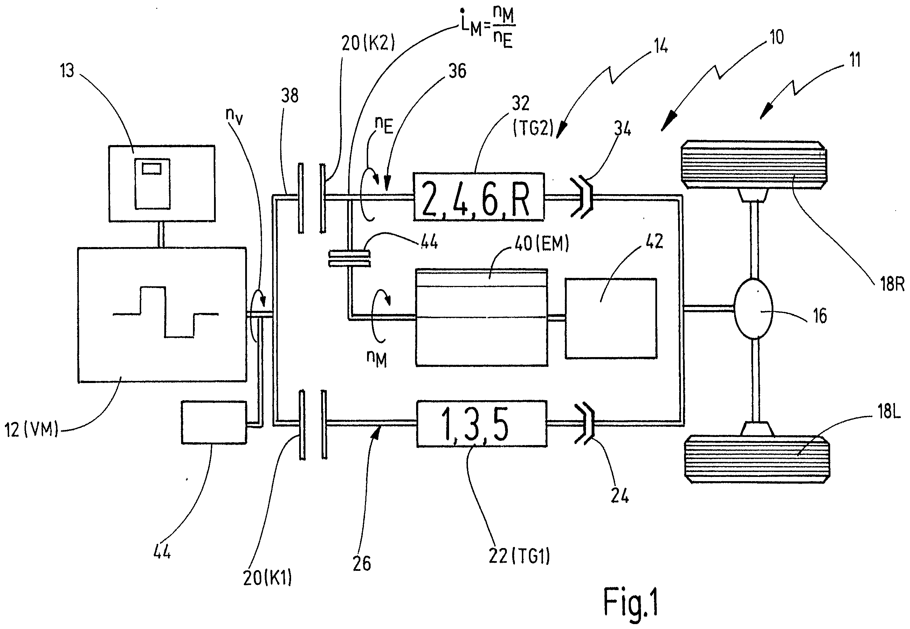

In Fig. 1 ist ein Antriebsstrang für ein Kraftfahrzeug 11 generell mit 10 bezeichnet. Das Kraftfahrzeug 11 kann beispielsweise ein Personenkraftwagen sein.

Der Antriebsstrang 10 beinhaltet einen Antriebsmotor 12, und zwar in Form eines Verbrennungsmotors, der aus einem Energiespeicher wie einem Kraftstofftank 13 versorgt wird. Ferner beinhaltet der Antriebsstrang 10 ein Doppelkupplungsgetriebe (DKG) 14, dessen Abtriebsseite mit einem Differential 16 verbunden ist. Das Differential 16 verteilt Antriebsleistung auf ein linkes und ein rechtes angetriebenes Rad 18L, 18R.

Das Doppelkupplungsgetriebe 14 beinhaltet eine erste Reibkupplung 20 sowie ein erstes Teilgetriebe 22. Das erste Teilgetriebe 22 beinhaltet beispielsweise die ungeraden Gangstufen 1, 3, 5, etc., die mittels zugeordneter Schaltkupplungen 24 ein- und auslegbar sind. Die erste Reibkupplung 20 (K1) und das erste Teilgetriebe 22 (TG1) bilden einen ersten Leistungsübertragungspfad zur Übertragung von Antriebsleistung von dem Antriebsmotor 12 zu dem Differential 16.

Das Doppelkupplungsgetriebe 14 beinhaltet ferner eine zweite Reibkupplung 30 (K2) sowie ein zweites Teilgetriebe 32 (TG2). Das zweite Teilgetriebe 32 beinhaltet beispielsweise Vorwärtsgangstufen 2, 4, 6, die mittels schematisch angedeuteter Schaltkupplungen 34 ein- und auslegbar sind. Eine Rückwärtsgangstufe kann dem ersten oder dem zweiten Teilgetriebe zugeordnet sein. Vorliegend ist die Rückwärtsgangstufe R dem zweiten Teilgetriebe 32 zugeordnet. Die zweite Reibkupplung 30 und das zweite Teilgetriebe 32 bilden einen zweiten Leistungsübertragungspfad zur Übertragung von Leistung von dem Antriebsmotor 12 zu dem Differential 16.

Ein Ausgang der ersten Reibkupplung 20 bzw. ein Eingang des ersten Teilgetriebes 22 ist in Fig. 1 mit 26 bezeichnet. Ein Ausgang der zweiten Reibkupplung 30 bzw. ein Eingang des zweiten Teilgetriebes 32 ist in Fig. 1 mit 36 bezeichnet. Die zwei Reibkupplungen 20, 30 weisen ein gemeinsames Eingangsglied 38 auf, das vorzugsweise drehfest mit einer Kurbelwelle des Antriebsmotors 12 verbunden ist. Die Drehzahl der Kurbelwelle bzw. des Eingangsgliedes 38 ist in Fig. 1 bei n_{V} dargestellt.

Der Antriebsstrang 10 beinhaltet ferner eine elektrische Maschine (EM) 40, die mit einer Anordnung 42 zur Ansteuerung und Energieversorgung verbunden ist. Die Anordnung 42 kann beispielsweise eine Leistungselektronik sowie eine Batterie beinhalten. Die Drehzahl der elektrischen Maschine ist in Fig. 1 bei n_{M} gezeigt. Die Drehzahl des Einganges 36 des zweiten Teilgetriebes 32 ist in Fig. 1 bei n_{E} gezeigt.

Die elektrische Maschine 40 ist an den Ausgang der zweiten Reibkupplung 30 bzw. den Eingang des zweiten Teilgetriebes 32 vorzugsweise fest angebunden, beispielsweise mittels eines Stirnradsatzes oder dgl. Alternativ hierzu kann die elektrische Maschine 40 mittels einer Koppelanordnung 44 (beispielsweise in Form einer Schaltkupplung) an den Eingang des zweiten Teilgetriebes 32 angebunden sein. Die Koppelanordnung 44 kann auch umschaltbar sein, so dass der Ausgang der elektrischen Maschine 40 alternativ mit dem Eingang 36 des zweiten Teilgetriebes 32 oder mit dem Eingang 26 des ersten Teilgetriebes 22 verbindbar ist.

Die Anbindung der elektrischen Maschine 40 an das zweite Teilgetriebe ermöglicht vorliegend ein elektrisches Fahren in nahezu allen Betriebssituationen, insbesondere auch im Rückwärtsgang.

Der Antriebsstrang 10 ist dazu ausgelegt, in drei unterschiedlichen Betriebsarten zu arbeiten. In einem konventionellen Antriebsmodus wird Antriebsleistung nur von dem Antriebsmotor 12 erzeugt. Gangwechsel erfolgen auf zugkraftunterbrechungsfreie Art und Weise, indem Antriebsleistung über einen der Leistungsübertragungspfade geführt wird, wobei in dem Teilgetriebe des anderen Leistungsübertragungspfades eine Gangstufe vorgewählt wird. Anschließend erfolgt ein Gangwechsel durch Übergabe des Leistungsübertragungsflusses von dem einen Leistungsübertragungspfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt.

Ferner ist ein hybridischer Antriebsmodus einrichtbar, bei dem Antriebsleistung sowohl von dem Antriebsmotor 12 als auch von der elektrischen Maschine 40 bereitgestellt wird. Hierbei können die Antriebsleistungen im Wesentlichen über den Summenpunkt am Eingang 36 des zweiten Teilgetriebes 32 (bzw. in Leistungsflussrichtung hinter der zweiten Reibkupplung 30) aufaddiert werden. Eine weitere Möglichkeit eines hybridischen Antriebsmodus' besteht darin, dass Antriebsleistung von der elektrischen Maschine über das eine Teilgetriebe und Antriebsleistung von dem Verbrennungsmotor über das andere Teilgetriebe übertragen werden, wobei ein Summenpunkt dann am Differential liegt. Im hybridischen Antriebsmodus kann die elektrische Maschine sowohl ein positives als auch ein negatives Drehmoment stellen (Boost-Betrieb bzw. Lastpunktanhebung/Laden/Rekuperation).

Schließlich ist ein dritter Antriebsmodus möglich, bei dem nur die elektrische Maschine 40 zur Erzeugung von Antriebsleistung angesteuert wird, wohingegen der Antriebsmotor 12 stillgelegt wird. Da die elektrische Maschine 40 auf der Sekundärseite der zweiten Reibkupplung 30 angebunden ist, können in diesem Betriebsmodus die herkömmlichen Schaltabläufe eines Doppelkupplungsgetriebes nicht angewendet werden. Wenn in dem elektrischen Antriebsmodus bei dieser Art von Hybrid-Antriebsstrang-Layout Gangwechsel stattfinden, erfolgen diese Gangwechsel folglich mit Zugkraftunterbrechung. Die zweite Reibkupplung 30 ist im rein elektrischen Betriebsmodus generell geöffnet. Um beispielsweise eine Zughochschaltung von der Gangstufe 2 in die Gangstufe 4 durchzuführen, muss das von der elektrischen Maschine 40 bereitgestellte Moment zum Auslegen des Startganges reduziert werden. Auch während des Einlegens der Zielgangstufe wird von der elektrischen Maschine 40 dabei kein Moment bereitgestellt, da ansonsten ggf. keine Synchronisierung an der zugeordneten Schaltkupplung 34 erfolgen kann.

Die elektrische Maschine 40 ist an den Eingang 36 des zweiten Teilgetriebes 32 über eine Maschinenübersetzung i_{M} angebunden, die sich berechnet zu n_{M}/n_{E}. Die Maschinenübersetzung i_{M} kann 1 sein. In diesem Fall kann die elektrische Maschine 40 beispielsweise auch koaxial zu einer Eingangswelle des zweiten Teilgetriebes 32 angeordnet sein. Vorzugsweise erfolgt die Anbindung der elektrischen Maschine 40 an den Eingang 36 des zweiten Teilgetriebes 32 jedoch über eine Stirnradstufe, beispielsweise an ein Zahnrad, das einer der Vorwärtsgangstufen des zweiten Teilgetriebes 32 zugeordnet ist.

Die Übersetzung der Stirnradstufe entspricht in diesem Fall der Maschinenübersetzung. Die Maschinenübersetzung liegt vorzugsweise in einem Bereich größer 1 bis 2, und insbesondere in einem Bereich von 1,2 bis 2.

Der Verbrennungsmotor 12 ist auf eine maximale Verbrennungsmotordrehzahl ausgelegt, die bei Dieselmotoren beispielsweise im Bereich von 4500 U/min liegen kann, bei Verbrennungsmotoren im Bereich von 6500 U/min bis hin zu 7500 U/min. Dies sind übliche maximale Verbrennungsmotordrehzahlen, wobei Spezialfahrzeuge auch höhere Drehzahlen erreichen können (beispielsweise Sportwagen).

Während im Stand der Technik die elektrische Maschine 40 so ausgelegt bzw. angesteuert wird, dass die maximale Maschinendrehzahl geteilt durch die Maschinenübersetzung (d.h. die Drehzahl n_{E}) maximal gleich der maximalen Verbrennungsmotordrehzahl ist, ist vorliegend vorgesehen, dass die maximale Maschinendrehzahl geteilt durch die Maschinenübersetzung größer ist als die maximale Verbrennungsmotordrehzahl, und zwar insbesondere wenigstens 1,1-mal so hoch wie die maximale Verbrennungsmotordrehzahl, vorzugsweise wenigstens 1,2-mal so hoch, insbesondere 1,3-mal so hoch und vorzugsweise wenigstens 1,4-mal so hoch wie die maximale Verbrennungsmotordrehzahl.

Das Ausgangsglied der zweiten Reibkupplung 30 und die zugeordneten Komponenten des zweiten Teilgetriebes 32 sind auf diese höhere Drehzahl konstruktiv ausgelegt.

Durch diese Maßnahme ist es möglich, in einem rein elektrischen Fahrmodus das Kraftfahrzeug 11 mit einem deutlich größeren Geschwindigkeitsbereich betreiben zu können, ohne in dem zweiten Teilgetriebe 32 Gangwechsel durchführen zu müssen.

Dies wird anhand eines Beispiels dargestellt. Beispielsweise soll ein rein elektrisches Fahren bis 120 km/h ohne Gangwechsel in dem zweiten Teilgetriebe 32 erfolgen.

Angenommen wird eine maximale Verbrennungsmotordrehzahl von 6000 U/min und eine Gesamtübersetzung in der Vorwärtsgangstufe 2 von 9.

Damit ergibt sich beispielsweise bei üblichen dynamischen Raddurchmessern eine maximale Geschwindigkeit im rein verbrennungsmotorischen Betrieb über die Vorwärtsgangstufe 2 von etwa 80 km/h.

Wenn die elektrische Maschine 40 beispielsweise für eine Maximaldrehzahl von 16.000 U/min ausgelegt ist und wenn die Maschinenübersetzung beispielsweise 1,8 beträgt, ergibt sich hieraus bei dem gleichen dynamischen Raddurchmesser eine maximale Geschwindigkeit im rein elektrischen Fahrbetrieb von etwa 120 km/h.

Da bei einer Maximalgeschwindigkeit von beispielsweise 120 oder 130 km/h ein überwiegender Teil des Fahrbetriebes im rein elektrischen Modus abgedeckt werden kann, kann der rein elektrische Fahrbetrieb im Wesentlichen ohne Gangwechsel erfolgen, folglich ohne Zugkraftunterbrechung.

Es versteht sich, dass die elektrische Maschine 40 auch bei niedrigen Drehzahlen bereits ein hohes Moment bereitstellt, so dass ein Anfahren in der Vorwärtsgangstufe 2 mittels der elektrischen Maschine möglich ist.

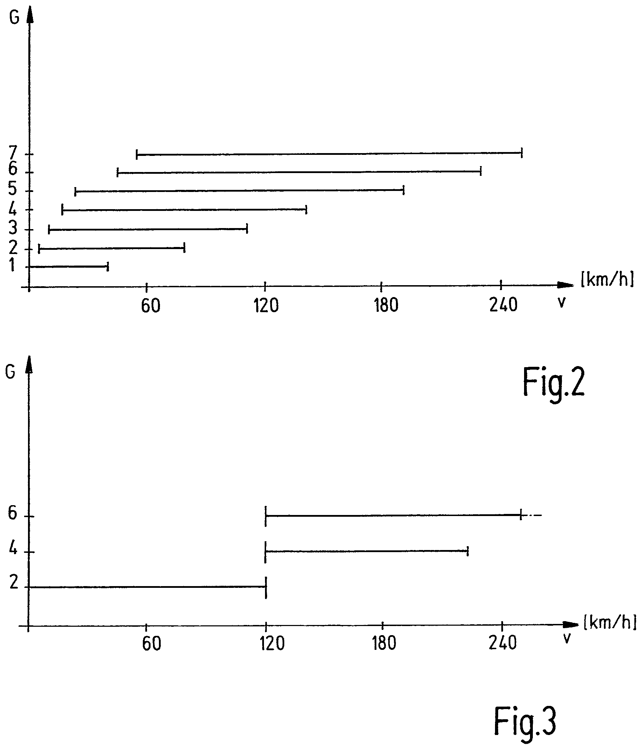

Fig. 2 zeigt in schematischer Form typische Geschwindigkeitsbereiche von Gangstufen eines Stufenwechselgetriebes für Kraftfahrzeuge. Eine Vorwärtsgangstufe 1 ist beispielsweise verwendbar bis zu einer maximalen Geschwindigkeit von 40 km/h. Die Vorwärtsgangstufe 2 beispielsweise bis maximal bis 80 km/h. Die dritte Gangstufe beispielsweise bis maximal 110 km/h. Die vierte Gangstufe beispielsweise bis maximal 150 km/h, die fünfte Gangstufe beispielsweise bis maximal 190 km/h, die sechste Gangstufe beispielsweise bis maximal 230 km/h, und die siebte Gangstufe beispielsweise bis maximal 250 km/h.

Die Mindestgeschwindigkeiten in den jeweiligen Gangstufen sind ebenfalls in an sich üblicher Weise ansteigend.

Fig. 3 zeigt nun die erfindungsgemäße Realisierung eines Verfahrens zum Betreiben eines Hybrid-Antriebsstranges der oben beschriebenen Art.

Dabei wird in der Vorwärtsgangstufe 2 ein Geschwindigkeitsbereich von 0 km/h bis 120 km/h abgedeckt. Lediglich dann, wenn im rein elektrischen Fahrbetrieb mit höheren Geschwindigkeiten gefahren werden soll, erfolgt ein Gangwechsel entweder in die Gangstufe 4 oder in die Gangstufe 6, die entsprechend höhere Drehzahlen bzw. Geschwindigkeiten einrichten können.

Bei den oben beschriebenen Übersetzungsverhältnissen könnte das Fahrzeug im rein elektrischen Fahrmodus in der Vorwärtsgangstufe 4 beispielsweise bis etwa 225 km/h betrieben werden.

In der Praxis werden aufgrund der hohen Widerstände und der relativ geringen Batteriekapazitäten derart hohe Geschwindigkeiten in der Regel nicht realisiert werden, jedenfalls nicht in einem Hybrid-Fahrzeug.

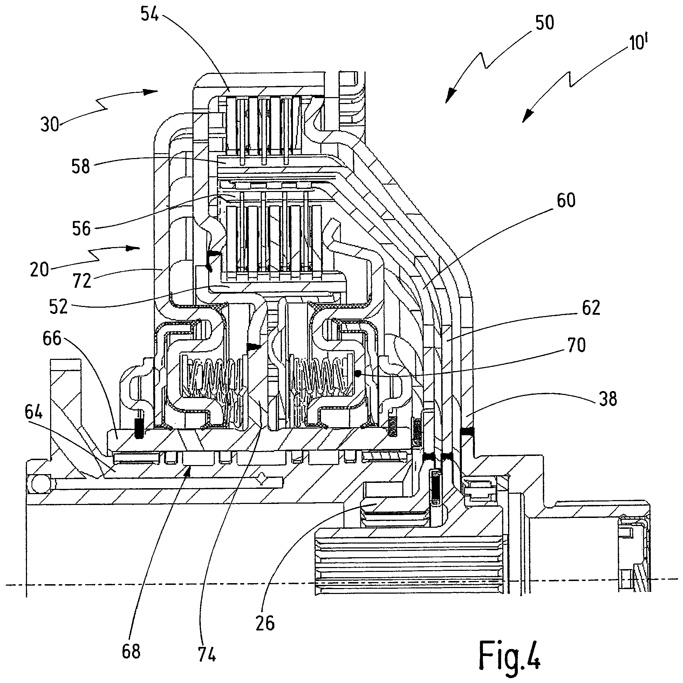

Fig. 4 zeigt in schematischer Form eine weitere Ausführungsform eines erfindungsgemäßen Antriebsstranges 10', der hinsichtlich Aufbau und Funktionsweise generell dem Antriebsstrang 10 der Fig. 1 entsprechen kann. Gleiche Elemente sind daher durch gleiche Bezugszeichen gekennzeichnet.

Vorliegend zeigt Fig. 4 eine Doppelkupplungsanordnung 50 des Antriebsstranges 10', die die erste Reibkupplung 20 und die zweite Reibkupplung 30 beinhaltet. Die zwei Reibkupplungen 20, 30 sind dabei als nasslaufende Lamellenkupplungen ausgebildet, die radial ineinander verschachtelt angeordnet sind, wobei die zweite Reibkupplung 30 radial außerhalb der ersten Reibkupplung 20 angeordnet ist.

Die Doppelkupplungsanordnung 50 weist ein gemeinsames Eingangsglied 38 auf, das vorliegend als Korbanordnung ausgebildet ist, die die Reibkupplungen im Wesentlichen auf beiden axialen Seiten sowie radial umgibt. Das Eingangsglied 38 ist verbunden mit einem Innenlamellenträger 52 der ersten Reibkupplung 20 sowie mit einem Außenlamellenträger 54 der zweiten Reibkupplung 30.

Die erste Reibkupplung 20 weist ferner einen Außenlamellenträger 56 auf, und die zweite Reibkupplung 30 weist ferner einen Innenlamellenträger 58 auf.

Die erste Reibkupplung 20 weist ein erstes Ausgangsglied 60 auf, das korbartig ausgebildet ist und mit dem Außenlamellenträger 56 der ersten Reibkupplung 20 verbunden ist. In entsprechender Weise weist die zweite Reibkupplung 30 ein zweites Ausgangsglied 62 auf, das korbartig ausgebildet ist und mit dem Innenlamellenträger 58 der zweiten Reibkupplung 30 verbunden ist. Das Ausgangsglied 60 der ersten Reibkupplung 20 ist mit einem Wellenelement verbunden, der mit dem Eingang 26 des ersten Teilgetriebes 22 verbindbar ist. In entsprechender Weise ist das zweite Ausgangsglied 62 der zweiten Reibkupplung 30 mit einem Wellenelement verbunden, das mit dem Eingang 36 des zweiten Teilgetriebes 32 verbindbar ist.

Die Doppelkupplungsanordnung 50 beinhaltet ferner eine gehäusefeste Nabe 64, an der eine hohle Trägerwelle 66 drehbar gelagert ist. Zwischen der Nabe 64 und der Trägerwelle 66 ist eine hydraulische Drehdurchführung 68 ausgebildet. Die Trägerwelle 66 ist starr mit dem Eingangsglied 38 der Reibkupplungsanordnung 50 verbunden. An der Trägerwelle 66 sind ferner ein erster Kolben 70 zum Betätigen der ersten Reibkupplung 20 sowie ein zweiter Kolben 72 zum Betätigen der zweiten Reibkupplung 30 angeordnet, die auf axial gegenüberliegenden Seiten eines Radialsteges 74 der Trägerwelle 66 angeordnet sind. Über das Befüllen nicht näher bezeichneter Zylinderräume, und zwar über die Drehdurchführung 68, lassen sich die Kolben 70, 72 betätigen, um die Reibkupplungen 20, 30 zu öffnen oder zu schließen.

Insbesondere das zweite Ausgangsglied 62 der zweiten Reibkupplung 30 ist vorliegend so ausgebildet, dass es ein minimales Trägheitsmoment aufweist, um auf diese Weise das Ausgangsglied 62 konstruktiv für höhere Drehzahlen auszulegen, die insbesondere größer sind als die maximale Verbrennungsmotordrehzahl, insbesondere größer als das 1,2-fache der maximalen Verbrennungsmotordrehzahl.

Hierzu ist das zweite Ausgangsglied 62 so ausgebildet, dass es auf möglichst kurzem Wege eine Verbindung zwischen dem Wellenabschnitt 36 und dem Innenlamellenträger 58 herstellt. Hierzu ist das zweite Ausgangsglied 62 unmittelbar benachbart zu dem ersten Ausgangsglied 60 angeordnet, bzw. mit einem minimierten Abstand. Auch das erste Ausgangsglied 60 ist so ausgeformt, dass es einen minimalen Abstand zu benachbarten Komponenten, einschließlich des ersten Kolbens 70 aufweist. Hierdurch kann das Trägheitsmoment des zweiten Ausgangsgliedes 62 minimiert werden, das bei rein elektrischem Fahrbetrieb deutlich höhere Drehzahlen erfährt als die maximale Verbrennungsmotordrehzahl.

Es versteht sich, dass im rein elektrischen Fahrbetrieb die zweite Reibkupplung 30 generell geöffnet bleibt.

In einer nicht näher gezeigten Steuereinrichtung des Antriebsstranges 10, 10' kann eine Sicherheitsschaltung vorgesehen sein, die auf sichere Art und Weise verhindert (beispielsweise ein sicherer Softwareabschnitt), dass die zweite Reibkupplung 30 während eines rein elektrischen Fahrbetriebes schließt, sofern hierdurch die maximale Verbrennungsmotordrehzahl überschritten werden könnte.

## Patentansprüche

1. Hybrid-Antriebsstrang (10) mit
- einem Verbrennungsmotor (12), der für eine maximale Verbrennungsmotordrehzahl ausgelegt ist;
- einer Doppelkupplungsanordnung (20, 30; 50), die eine erste Reibkupplung (20) und eine zweite Reibkupplung (30) aufweist, wobei die Reibkupplungen (20, 30) ein mit dem Verbrennungsmotor (12) gekoppeltes gemeinsames Eingangsglied (38) und jeweils ein Ausgangsglied (60, 62) aufweisen;
- einer Getriebeanordnung (22, 32), die ein erstes Teilgetriebe (22) und ein zweites Teilgetriebe (32) aufweist, wobei das Ausgangsglied (60) der ersten Reibkupplung (20) mit einem Eingang (26) des ersten Teilgetriebes (22) verbunden ist und wobei das Ausgangsglied (62) der zweiten Reibkupplung (30) mit einem Eingang (36) des zweiten Teilgetriebes (32) verbunden ist;
- einer elektrischen Maschine (40), die mit dem Ausgangsglied (62) der zweiten Reibkupplung (30) über eine Maschinenübersetzung (i_{M}) verbunden oder verbindbar ist, derart, dass ein rein elektrischer Fahrbetrieb über das zweite Teilgetriebe (32) einrichtbar ist, wobei die elektrische Maschine (40) für eine maximale Maschinendrehzahl ausgelegt ist;
**dadurch gekennzeichnet, dass**
die maximale Maschinendrehzahl geteilt durch die Maschinenübersetzung größer ist als die maximale Verbrennungsmotordrehzahl, wobei das Ausgangsglied (62) der zweiten Reibkupplung (30) konstruktiv auf die maximale Maschinendrehzahl geteilt durch die Maschinenübersetzung (i_{M}) ausgelegt ist.

2. Hybrid-Antriebsstrang nach Anspruch 1, **dadurch gekennzeichnet, dass** die maximale Maschinendrehzahl um wenigstens 50 % größer ist als die maximale Verbrennungsmotordrehzahl.

3. Hybrid-Antriebsstrang nach Anspruch 1 oder 2, **dadurch gekennzeichnet, dass** die maximale Maschinendrehzahl wenigstens 12.000 U/min beträgt, insbesondere wenigstens 15.000 U/min.

4. Hybrid-Antriebsstrang nach einem der Ansprüche 1 - 3, **dadurch gekennzeichnet, dass** die Maschinenübersetzung (i_{M}) im Bereich von 1 bis 2 liegt, insbesondere im Bereich von 1,2 bis 2.

5. Hybrid-Antriebsstrang nach einem der Ansprüche 1 - 4, **dadurch gekennzeichnet, dass** das zweite Teilgetriebe (32) eine Mehrzahl von Vorwärtsgangstufen (2, 4, 6) aufweist und wobei die maximale Maschinendrehzahl geteilt durch die Maschinenübersetzung so gewählt ist, dass bei rein elektrischem Fahrbetrieb über eine (2) der Vorwärtsgangstufen (2, 4, 6) des zweiten Teilgetriebes (32) ein Fahrzeuggeschwindigkeitsbereich von 0 km/h bis wenigstens 80 km/h, insbesondere bis wenigstens 100 km/h und bevorzugt bis wenigstens 120 km/h realisierbar ist.

6. Hybrid-Antriebsstrang nach einem der Ansprüche 1 - 5, **dadurch gekennzeichnet, dass** die zweite Reibkupplung (30) als nasslaufende Lamellenkupplung ausgebildet ist, wobei das Ausgangsglied (62) der zweiten Reibkupplung (30) ein Korbelement aufweist, das im Bereich seines Innenumfanges mit einer Eingangswelle des zweiten Teilgetriebes (32) verbunden ist und das im Bereich seines Außenumfanges mit einem Lamellenträger (58) der zweiten Reibkupplung (30) verbunden ist.

7. Hybrid-Antriebsstrang nach Anspruch 6, **dadurch gekennzeichnet, dass** das Korbelement so ausgebildet ist, dass das Trägheitsmoment minimiert ist.

8. Verfahren zum Betreiben eines Hybrid-Antriebsstranges (10) nach einem der Ansprüche 1 - 7 in einem Kraftfahrzeug (11), mit dem Schritt, für einen rein elektrischen Fahrbetrieb die unterste Gangstufe (2) des zweiten Teilgetriebes (32) einzulegen, und die elektrische Maschine (40) für einen Geschwindigkeitsbereich des Kraftfahrzeuges von 0 km/h bis wenigstens 80 km/h, insbesondere bis wenigstens 100 km/h und bevorzugt bis wenigstens 120 km/h, zu verwenden, ohne in dem zweiten Teilgetriebe (32) einen Gangstufenwechsel vorzunehmen.

## Claims

1. A hybrid drivetrain (10), having
- an internal combustion engine (12) which is designed for a maximum internal combustion engine rotational speed;
- a dual-clutch arrangement (20, 30; 50) which has a first friction clutch (20) and a second friction clutch (30), wherein the friction clutches (20, 30) have a common input element (38), coupled to the internal combustion engine (12), and in each case one output element (60, 62);
- a transmission arrangement (22, 32) which has a first sub-transmission (22) and a second sub-transmission (32), wherein the output element (60) of the first friction clutch (20) is connected to an input (26) of the first sub-transmission (22), and wherein the output element (62) of the second friction clutch (30) is connected to an input (36) of the second sub-transmission (32);
- an electric machine (40) which is or can be connected to the output element (62) of the second friction clutch (30) via a machine transmission ratio (i_{M}), in such a way that a purely electric driving mode can be established by means of the second sub-transmission (32), wherein the electric machine (40) is designed for a maximum machine rotational speed;
**characterized in that**
the maximum machine rotational speed divided by the machine transmission ratio is greater than the maximum internal combustion engine rotational speed, wherein the output element (62) of the second friction clutch (30) is structurally designed for the maximum machine rotational speed divided by the machine transmission ratio (i_{M}).

2. The hybrid drivetrain as claimed in claim 1, **characterized in that** the maximum machine rotational speed is at least 50% greater than the maximum internal combustion engine rotational speed.

3. The hybrid drivetrain as claimed in claim 1 or 2, **characterized in that** the maximum machine rotational speed is at least 12,000 rpm, in particular at least 15,000 rpm.

4. The hybrid drivetrain as claimed in one of claims 1 - 3, **characterized in that** the machine transmission ratio (i_{M}) is in the range from 1 to 2, in particular in the range from 1.2 to 2.

5. The hybrid drivetrain as claimed in one of claims 1 - 4, **characterized in that** the second sub-transmission (32) has a multiplicity of forward gearspeeds (2, 4, 6), and wherein the maximum machine rotational speed divided by the machine transmission ratio is selected such that in the case of the purely electric driving mode a vehicle velocity range from 0 km/h to at least 80 km/h, in particular to at least 100 km/h and preferably to at least 120 km/h can be implemented by means of one (2) of the forward gearspeeds (2, 4, 6) of the second sub-transmission (32).

6. The hybrid drivetrain as claimed in one of claims 1 - 5, **characterized in that** the second friction clutch (30) is embodied as a wet-running multi-disk clutch, wherein the output element (62) of the second friction clutch (30) has a cage element which is connected in the region of its inner circumference to an input shaft of the second sub-transmission (32) and which is connected in the region of its outer circumference to a multi-disk carrier (58) of the second friction clutch (30).

7. The hybrid drivetrain as claimed in claim 6, **characterized in that** the cage element is embodied in such a way that the moment of inertia is minimized.

8. A method for operating a hybrid drivetrain (10) as claimed in one of claims 1 - 7 in a motor vehicle (11), having the step of engaging the lowest gearspeed (2) of the second sub-transmission (32) for a purely electric driving mode and of using the electric machine (40) for a velocity range of the motor vehicle from 0 km/h to at least 80 km/h, in particular to at least 100 km/h and preferably to at least 120 km/h, without performing a change of gearspeed in the second sub-transmission (32).

## Revendications

1. Chaîne cinématique hybride (10) comprenant
- un moteur à combustion (12) qui est conçu pour un régime maximal du moteur à combustion ;
- un système de double embrayage (20, 30 ; 50) qui présente un premier embrayage à friction (20) et un deuxième embrayage à friction (30), les embrayages à friction (20, 30) présentant un organe d'entrée (38) commun accouplé au moteur à combustion (12) et un organe de sortie respectif (60, 62),
- un système de transmission (22, 32), qui présente une première transmission partielle (22) et une deuxième transmission partielle (32), l'organe de sortie (60) du premier embrayage à friction (20) étant raccordé à une entrée (26) de la première transmission partielle (22), et l'organe de sortie (62) du deuxième embrayage à friction (30) étant raccordé à une entrée (36) de la deuxième transmission partielle (32) ;
- une machine électrique (40) qui est raccordée ou qui peut être raccordée à l'organe de sortie (62) du deuxième embrayage à friction (30) par le biais d'une démultiplication de machine (i_{M}) de telle sorte qu'un fonctionnement de conduite purement électrique puisse être établi par le biais de la deuxième transmission partielle (32), la machine électrique (40) étant conçue pour un régime maximal de la machine ;
**caractérisée en ce que**
le régime maximal de la machine divisé par la démultiplication de machine est supérieur au régime maximal du moteur à combustion, l'organe de sortie (62) du deuxième embrayage à friction (30) étant conçu de manière constructive pour un régime maximal de la machine divisé par la démultiplication de machine (i_{M}).

2. Chaîne cinématique hybride selon la revendication 1, **caractérisée en ce que** le régime maximal de la machine est supérieur d'au moins 50 % au régime maximal du moteur à combustion.

3. Chaîne cinématique hybride selon la revendication 1 ou 2, **caractérisée en ce que** le régime maximal de la machine vaut au moins 12 000 tr/m, en particulier au moins 15 000 tr/m.

4. Chaîne cinématique hybride selon l'une quelconque des revendications 1 à 3, **caractérisée en ce que** la démultiplication de machine (i_{M}) est de l'ordre de 1 à 2, en particulier de l'ordre de 1,2 à 2.

5. Chaîne cinématique hybride selon l'une quelconque des revendications 1 à 4, **caractérisée en ce que** la deuxième transmission partielle (32) présente une pluralité de rapports de transmission de marche avant (2, 4, 6) et dans laquelle le régime maximal de la machine divisé par la démultiplication de machine est choisi de telle sorte que dans le cas d'un fonctionnement de conduite purement électrique par le biais d'un (2) des rapports de transmission de marche avant (2, 4, 6) de la deuxième transmission partielle (32), une plage de vitesse du véhicule de 0 km/h à au moins 80 km/h, en particulier jusqu'à au moins 100 km/h et de préférence jusqu'à au moins 120 km/h puisse être réalisée.

6. Chaîne cinématique hybride selon l'une quelconque des revendications 1 à 5, **caractérisée en ce que** le deuxième embrayage à friction (30) est réalisé sous forme d'embrayage à disque humide, l'organe de sortie (62) du deuxième embrayage à friction (30) présentant un élément de panier qui est raccordé dans la région de sa périphérie intérieure à un arbre d'entrée de la deuxième transmission partielle (32) et qui est raccordé dans la région de sa périphérie extérieure à un support de disques (58) du deuxième embrayage à friction (30).

7. Chaîne cinématique hybride selon la revendication 6, **caractérisée en ce que** l'élément de panier est réalisé de telle sorte que le couple d'inertie soit minimisé.

8. Procédé pour faire fonctionner une chaîne cinématique hybride (10) selon l'une quelconque des revendications 1 à 7 dans un véhicule automobile (11), comprenant l'étape, pour un fonctionnement de conduite purement électrique, consistant à enclencher le rapport de transmission le plus bas (2) de la deuxième transmission partielle (32) et à utiliser la machine électrique (40) pour une plage de vitesses du véhicule automobile de 0 km/h à au moins 80 km/h, en particulier jusqu'à au moins 100 km/h et de préférence jusqu'à au moins 120 km/h, sans effectuer de changement de rapport de transmission dans la deuxième transmission partielle (32).
